# EUROPEAN PATENT APPLICATION

(11) **EP 2 048 121 A1**
(43) Date of publication of application: **15.04.2009**
(21) Application number: 08164123.5
(22) Date of filing: 11.09.2008
(51) Int. Cl.: C03C 3/06, C03C 23/00, C03B 19/14

(54) **A black synthetic quartz glass with a transparent layer**

(30) Priority: 11.10.2007 JP 2007265582
(71) Applicant: Heraeus Quarzglas GmbH & Co. KG, 63450 Hanau (DE); Shin-Etsu Quartz Products Co.,Ltd., Shinjuku-ku Tokyo 160-0023 (JP)
(72) Inventor: Sato, Tatsuhiro, Fukushima Fukushima 963-0101 (JP); Yoshida, Nobumasa, Fukushima Fukushima 963-0701 (JP)
(74) Representative: Staudt, Armin Walter

(57) **Abstract**

To provide a black synthetic quartz glass with a transparent layer, which has high emissivity in the far infrared region, has excellent light-shielding properties, maintains the same degree of purity as synthetic quartz glass in terms of metal impurities, has high-temperature viscosity characteristics comparable to natural quartz glass, can undergo high-temperature processing like welding, and does not release carbon from its surface; together with a method for the production thereof.

A porous silica glass body containing hydroxyl groups is subjected to a gas phase reaction in a volatile organosilicon compound atmosphere at a temperature between 100°C and 1200°C and, following the reaction, evacuation is commenced and, on reaching a degree of vacuum exceeding 10 mmHg (1343 Pa), heatingis carried out at a temperature between 1200°C and 2000°C to produce a compact glass body.

## Description

### Technical Field

The present invention relates to a black synthetic quartz glass with a transparent layer and to a method for the production thereof. Furthermore, it also relates to optical parts such as spectral cells, light-shielding components for semiconductor production equipment, infrared heat-absorbing components and plasma-etching-resistant components, employing this black synthetic quartz glass with a transparent layer.

### Technical Background

Quartz glass is employed in optical fields such as spectral cells on account of its good light transmission over the range from the ultraviolet to the infrared region and its low thermal expansion. Conventionally, in such fields, in regions where local light shielding is required there has been employed a black glass where a minute amount of a transition metal oxide is added to the quartz glass, and then an optical cell produced by, for example, coupling this to transparent quartz glass by hot pressure bonding. However, in recent years, as optical cells have become ever smaller and thinner, it has been found that the light shielding is sometimes inadequate with the conventional black glass and so there is a demand for a black quartz glass with enhanced light shielding properties and which can be readily coupled to transparent quartz glass.

Moreover, quartz glass also possesses the features of heat resistance and high chemical purity, and it is widely used for example in the jigs/fixtures employed for semiconductor production. However, recently, in the heat-treatment stages of semiconductor production processes there has been an increase in the stages conducted in the high temperature region exceeding 1000°C, so high heat resistance is demanded. In addition, in a rapid heating process employing infrared light, the heat loss due to transparent quartz glass through which the infrared light passes has become a problem and there is a need for a component for shielding from the infrared irradiation the parts other than those being heated. For such reasons, there is a demand for the development of a black quartz glass which is outstanding in its heat resistance, effectively blocksout infrared rays, has rapid heating and cooling characteristics, is excellent in its thermal insulating properties and is resistant to thermal shock at the time of rapid heating and cooling, and also which does not contain metal impurities which are a source of process contamination.

The following are known examples of types of black glass in which silica is the chief component. In Japanese Patent JP 3156733, a black quartz glass is proposed where metal element compounds are added to the quartz glass. However, with this kind of black quartz glass the light shielding properties are sometimes inadequate and there is also the fear that the contained metal component brings about process contamination, so there are associated difficulties in the application of such a glass to the semiconductor production field.

Furthermore, in JP-A-2000-281430 there is proposed a black quartz glass where an organic binder which can serve as a carbon source is added to a silica powder, then heat treatment carried out to bring about decomposition and generate carbon, after which heatingis performed to cause solidsolution of the carbon in the glass network. However, a glass of this kind with carbon in solid solution is known to have mechanical and thermal properties which differ from those of normal quartz glass, e.g. raised hardness and raised high-temperature viscosity. Moreover, its thermal expansion coefficient is also thought to be altered, so there are difficulties in terms of the use of such a glass by coupling or fitting to ordinary transparent quartz glass. Furthermore, when, for example, surface heating is performed, the carbon in the region of the surface reacts, generating blow-holes, and so welding or flame processing is impossible. In addition, in the case where this type of black quartz glass is employed in the semiconductor production field, carbon is released from the quartz glass surface and abnormalities often arise in the properties of the semiconductor device.

### Problem to be Solved by the Invention

The objective of the present invention lies in providing a black synthetic quartz glass with a transparent layer, which has high emissivity in the far infrared region, excellent light-shielding properties, maintains the same degree of purity as synthetic quartz glass in terms of metal impurities, has high-temperature viscosity characteristics comparable to natural quartz glass, can undergo high-temperature processing like welding and does not release carbon from its surface; together with a method for the production thereof.

### Means for Solving the Problem

The present inventors have carried out painstaking research to solve the aforesaid problem, as a result of which they have developed the black synthetic quartz glass with a transparent layer described below, together with a method for its production.

Specifically, the method of the present invention for producing a black synthetic quartz glass with a transparent layer is characterized by a method comprising the following steps: subjecting a porous silica glass body containing hydroxyl groups to a gas phase reaction in a volatile organosilicon compound atmosphere at a temperature of between 100°C and 1200°C and, after the reaction, evacuation of the porous silica glass body until a degree of vacuum exceeding 10 mmHg (=1343 Pa) is reached, heating the porous silica glass body at a temperature of between 1200°C and 2000°C under formation of a compact glass body.

Prior to supplying the volatile organosilicon compound to the aforesaid porous silica glass body, it is preferred that preheating be conducted for a fixed time in a reduced-pressure atmosphere at between 100°C and 1200°C.

The aforesaid volatile organosilicon compound is preferably an organosilazane, and more preferably hexamethyldisilazane.

The black synthetic quartz glass with a transparent layer of the present invention is characterized in that the emissivity of the black quartz portion in the far infrared region is at least 0.8, the 200-10,000 nm light transmittance is no more than 10% at a thickness of 1 mm, the total metal impurity concentration is ≤ 1 wtppm, the contained carbon concentration exceeds 30 wtppm but is no more than 50,000 wtppm, the viscosity at 1280°C is at least 10^{11.7} poise, and there is formed, on the surface, a ≥ 1 mm synthetic quartz glass transparent layer of contained carbon concentration less than 30 wtppm.

The inventive black synthetic quartz glass with a transparent layer is ideally produced by the aforesaid production method of the present invention.

In accordance with the present invention there can be obtained a black synthetic quartz glass with a transparent layer, which has high emissivity in the far infrared region, has excellent light-shielding properties, maintains the same degree of purity as synthetic quartz glass in terms of metal impurities, has high-temperature viscosity characteristics comparable to natural quartz glass, can undergo high-temperature processing like welding and does not release carbon from its surface.

### Preferred Mode for Practising the Invention

Below, modes of practising the present invention are explained but these practical modes are provided for exemplification purposes and it goes without saying that many variations are possible within the technical concept of the invention. The black synthetic quartz glass with a transparent layer of the present invention can be produced by the following method. Specifically, the method of the present invention for producing a black synthetic quartz glass with a transparent layer is characterized in that it includes a stage in which a porous silica glass body containing hydroxyl groups is subjected to a gas phase reaction at a temperature of between 100°C and 1200°C in a volatile organosilicon compound atmosphere, and a stage in which, following this gas phase reaction, the glass body is set in a furnace, evacuation commenced and, having attained a degree of vacuum exceeding 10 mmHg (=1343 Pa), heating is begun and heatingcarried out at a temperature of between 1200°C and 2000°C to produce a compact glass body.

By raising the degree of vacuum to at least the degree of vacuum stated above prior to commencing the firing, the carbon component from the volatile organosilicon compound remaining in the porous body is caused to diffuse and to be discharged from the surface of the silica porous body so that, thereafter, when sintering proceeds, a transparent synthetic quartz glass layer is formed at the surface of the glass body. In the present invention, it is possible to form on the glass surface a synthetic quartz glass transparent layer of thickness at least 1 mm, where the carbon concentration in this transparent glass region is less than 30 wtppm.

On the other hand, the volatile organosilicon compound which was not been subject to diffusion and discharge remains in the interior region so, by means of the sintering, thermal decomposition is brought about and a large amount of carbon is left, forming a black quartz glass region which satisfies the following characteristics. Specifically, in the black quartz glass region carbon remains within a range which exceeds 30 wtppm but is no more than 50,000 wtppm, the emissivity in the far infrared region is at least 0.8, the 200-10,000 nm light transmittance is no more than 10% at a thickness of 1 mm, the total metal impurity concentration is no more than 1 wtppm, and the viscosity at 1280°C is at least 10^{11.7} poise.

There are no particular restrictions on the aforesaid porous silica glass body containing hydroxyl groups but a synthetic quartz glass porous body produced by depositing the quartz glass fine particles (soot) obtained by hydrolysis of a glass-forming starting material with an oxyhydrogen flame is preferred. A silicon compound is ideal as the glass-forming starting material and examples of such silicon compounds include silicon halides such as silicon tetrachloride, trichlorosilane and dichlorosilane, monosilane, methyltrimethoxysilane and the like. It may also be a porous body produced by the sol-gel method. The concentration of the hydroxyl groups in the porous silica glass body is preferably between 100 and 3000 wtppm.

There are no particular restrictions on the aforesaid volatile organosilicon compound (the reaction gas) providing it is a volatile organosilicon compound which does not contain Si-X bonds (where X = F, Cl, Br or I), but using a silicon compound which contains nitrogen is preferred. In particular, an organosilicon compound which has Si-N bonds, namely an organosilazane, is ideal in that it has good reactivity for hydroxyl groups and the hydroxyl groups are readily eliminated. Moreover, if this organosilazane is hexamethyldisilazane, it is possible to incorporate a trace amount of nitrogen and the level of increase in the viscosity of the glass body is high, so this is especially suitable.

Specific examples of volatile organosilicon compounds employed in the present invention are silicoacetic acid, organoacetoxysilanes (e.g. acetoxytrimethylsilane and the like), organosilanes (e.g. methylsilane, tetramethylsilane, allyltrimethylsilane, dimethylsilane, tetraethylsilane, triethylsilane, tetraphenylsilane and the like), organopolysilanes (e.g. hexamethyldisilane, hexaethyldisilane and the like), organosilanols (e.g. trimethylsilanol, diethylsilanediol and the like), trimethyl(trifluoromethanesulphonyloxy)silane, trimethyl(methylthio)silane, azidotrimethylsilane, cyanotrimethylsilane, (ethoxycarbonylmethyl)trimethylsilane, N,O-bis(trimethylsilyl)acetamide, organosiloxanes (e.g. hexamethyldisiloxane, octamethyltrisiloxane, hexamethylcyclotrisiloxane, hexaphenylcyclotrisiloxane, octamethylspiro[5.5]pentasiloxane and the like), organosilazanes (e.g. hexamethyldisilazane, hexaethyldisilazane, hexaphenylsilazane, triethylsilazane, tripropylsilazane, triphenylsilazane, hexamethylcyclotrisilazane, octamethylcyclotetrasilazane, hexaethylcyclotrisilazane, octaethylcyclotetrasilazane, hexaphenylcyclotrisilazane and the like), alkoxysilanes (e.g. tetramethoxysilane, methyltrimethoxysilane, dimethyldimethoxysilane, methoxytrimethylsilane, phenyltrimethoxysilane, tetraethoxysilane, methyltriethoxysilane, dimethyldiethoxysilane, phenyltriethoxysilane, diphenyldiethoxysilane, trimethylphenoxysilane, hexyltrimethoxysilane, hexyltriethoxysilane, decyltrimethoxysilane, decyltrimethoxysilane, trifluoropropyltrimethoxysilane, heptadecatrifluorodecyltrimethoxysilane and the like), organosilanecarboxylic acids (e.g. trimethylsilylpropionic acid and the like), organosilanethiol (e.g. trimethylsilanethiol and the like), organosilicon isocyanates (e.g. trimethylsilicon isocyanate, triphenylsilicon isocyanate and the like), organosilicon isothiocyanates (e.g. trimethylsilicon isothiocyanate, phenylsilicon triisothiocyanate and the like), organosilthians (e.g. hexamethyldisilthian, tetramethylcyclodisilthian and the like), and organosilmethylenes (e.g. hexamethyldisilmethylene, octamethyltrisilmethylene and the like), etc.

With regard to the aforesaid gas phase reaction, if the temperature is less than 100°C then reaction does not proceed, while if the temperature exceeds 1200°C then compaction of the porous silica glass body occurs and the gas does not diffuse into the silica porous body. Hence, it is preferred that the reaction be carried out at a temperature between 100°C and 1200°C.

Furthermore, if the sintering temperature exceeds 2000°C, the glass body is excessively softened and it is difficult to retain the layered structure, so the temperature range at the time of heatingis preferably between 1200°C and 2000°C.

The atmosphere at the time of the heatingis not particularly restricted and, for example, it may be a vacuum, an inert gas, oxygen or chlorine. However, an inert gas is preferred, with nitrogen, Ar or a gaseous mixture of these being more preferred.

With regard to the pressure conditions at the time of the firing, by performing the heatingunder reduced pressure it is possible to reduce the amount of residual carbon in the vicinity of the glass body surface very effectively, so this is ideal.

Prior to supplying the reaction gas to the aforesaid porous silica glass body, it is preferred that the porous silica glass body be preheated for a fixed time in a reduced-pressure atmosphere in the temperature range 100°C to 1200°C, and preferably in the vicinity of the reaction temperature. Thereafter, the reaction of the porous glass body with the reaction gas is carried out, followed by the firing.

In accordance with the inventive method, there is obtained a black synthetic quartz glass with a transparent layer, which is highly pure and where the total content of metal impurities such as Li, Na, K, Mg, Ti, Fe, Cu, Ni, Cr and Al is no more than 1 wtppm (and may be 0).

Below, a more detailed explanation is provided taking as an example an embodiment where hexamethyldisilazane [(CH₃)₃Si]₂NH is used as the reaction gas in the method for producing the black synthetic quartz glass with a transparent layer according to the present invention. First of all, tetrachlorosilane is hydrolysed by a known method and fine silica particles deposited in the form of layers to produce a porous body. This porous body is set inside a quartz glass core tube provided within an electrical furnace, and the temperature raised to a specified temperature. It is preferred that, at this time, the moisture adsorbed onto the porous body be removed by maintaining the porous body for a fixed time in the region of the reaction temperature.

Next, while diluting with nitrogen gas, a flow of the hexamethyldisilazane is produced and reaction carried out between this hexamethyldisilazane and the hydroxyl groups bonded to the porous body. It is thought that a reaction of the kind represented by formula (1) below occurs at this time.

Si-OH + [(CH₃)₃Si]₂NH → Si-N-[(CH₃)₃Si]₂ + H₂O (1)

Following the end of the reaction, which is carried out at a reaction temperature of 100-1200°C, the porous body is set in a furnace and evacuation commenced.

After attaining a degree of vacuum exceeding 10 mmHg (=1343Pa), preferably at least 5 mmHg (=671.5 Pa), and more preferably at least 1 mmHg (=134 Pa), heating is begun and compaction carried out at a temperature of 1200-2000°C.

Once the heating temperature exceeds about 800°C, the residual silane gas within the porous body decomposes, generating free carbon in considerable quantities. In the subsequent heating, this remains in the glass body and colours the quartz glass obtained to a black colour. On the other hand, there is diffusion and discharge of the free carbon down to a depth of 10 mm from the outer surface and, depending on the degree of vacuum, there may be obtained a transparent synthetic quartz glass layer of thickness at least 1 mm, and preferably 2 mm to 10 mm. In every region, the Si-N-[(CH₃)₃Si]₂ remaining in the porous body in part forms Si-N or Si-C, and so contributes to an enhancement in the viscosity.

Below, the present invention is explained in more specific terms by providing examples but it goes without saying that these examples are provided for exemplification and are not to be interpreted in a restrictive fashion.

### Brief Explanation of the Drawings

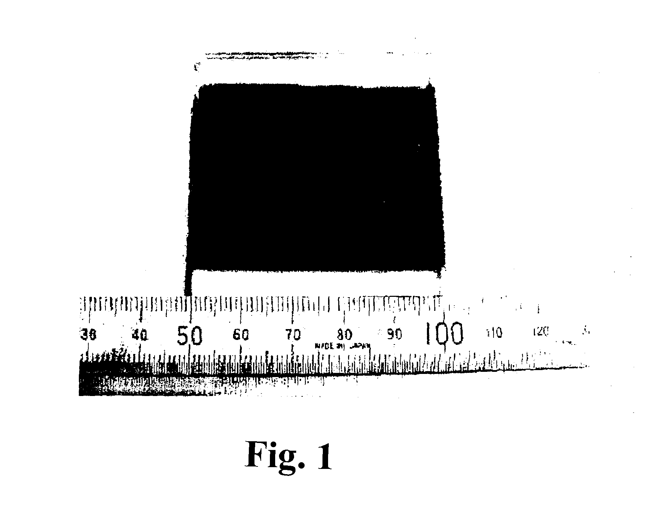

Figure 1: This is a photo showing the result from Example 1.

### Example 1

An approximately 1 kg quartz glass porous body of cylindrical shape with a diameter of 100 mm, obtained by depositing numerous layers of quartz glass by the flame hydrolysis of tetrachlorosilane, was set inside a quartz glass core tube (diameter 200 mm) fitted within an electric furnace. Next, after evacuating the interior of the furnace core tube, the temperature was raised to 500°C and preheating performed for 60 minutes at this temperature.

Subsequently, while heating up to the reaction temperature, hexamethyldisilazane vapour was supplied as the reaction gas, while diluting with N₂, to bring about reaction with the hydroxyl groups in the porous body. Heating was conducted while holding at the reaction temperature shown in Table 1 for the reaction time indicated. The flow rate of the N₂ gas was 1 mol/h.

Following the completion of the reaction, the treated porous body was shifted within the furnace and a vacuum applied to reduce the pressure to 1 × 10⁻³ mmHg, (0,13 Pa) after which heatingwas performed under the conditions shown in Table
1. A synthetic quartz glass body was thereby obtained having a transparent layer of thickness from 5 mm to 10 mm at the outer surface, and having a compacted black region in the interior.

The black synthetic quartz glass body with a transparent layer thus obtained was sectioned and observation carried out from the deposited layer cross-sectional direction. Figure 1 is a photo of the black synthetic quartz glass body with a transparent layer from Example 1 observed from said cross-sectional direction.
As shown in Figure 1, a transparent layer was formed to a depth of between 5-10 mm from the outer surface of the cylindrical glass body, and on the inside of this was formed a black quartz glass region.

The following measurements were carried out on the black synthetic quartz glass body with a transparent layer thus obtained. The results are shown in Table 2.

The carbon (C) in the transparent region and in the black region of the black synthetic quartz glass body with a transparent layer was measured by a combustion/ infrared absorption method. Furthermore, the Li, Na, K, Mg, Ti, Fe, Cu, Ni, Cr and Al contents were measured by the ICP mass spectrometry method. The total content of said metals is shown in Table 2.

The OH group content was calculated by measuring the specific absorbance in the infrared region by FTIR.

Furthermore, measurements were also respectively performed of viscosity (units: poise) by heating to 1280°C and determining the viscosity at this temperature by the beam bending method; and of the quartz glass colour based on observation; and again of the transmittance of light of wavelength 200-10,000 nm at a thickness of 1 mm. With regard to the black region in the obtained black synthetic quartz glass body with a transparent layer, the emissivity in the far infrared region was measured based on the method in the Bulletin of the Tokyo Metropolitan Industrial Research Institute No.2 (1999), pages 45-48. Specifically, from the measured values of the reflectance and transmittance of the glass body in the far infrared region (wavelengths 3, 100, 200, 300, 400, 500, 600, 700, 800, 900 and 1000 µm) at normal temperature, the emissivity was calculated at each of the wavelengths. As the calculation method, the absorbance (%) was calculated as 100(%) - (reflectance (%)) + transmittance(%)), and with the absorbance(%) taken as 1/100 calculation of the emissivity (spectral emissivity) carried out. In measuring the reflectance, an integrating sphere type total reflection measurement device was fitted to a spectrophotometer, measurement performed using a standard reflecting plate (gold coated mirror surface) and then the measurement of the reflectance carried out. The average value of the reflectance obtained is shown in Table 2.

In addition, the black synthetic quartz glass body with a transparent layer was subjected to desorption gas analysis while heating. The ion current value which indicates the obtained amount of CO₂ gas is shown in Table 2.

### Example 2

Except for the changes indicated in Table 1, a compacted black synthetic quartz glass body with a transparent layer was obtained under the same treatment conditions as in Example 1. The results obtained for the same measurements as carried out in Example 1 are again shown in Table 2.

### Comparative Example 1

A compacted synthetic quartz glass body where the entire region of the glass body was blackened was obtained using the same treatment conditions as in Example 1 except that, as indicated in Table 1, the heatingwas carried out at atmospheric pressure without performing pressure-reduction prior to the firing.

The results for the same measurements as carried out in Example 1 are also shown in Table 2.

As a natural product, there was employed a quartz glass material obtained by fusing natural rock crystal with an oxyhydrogen flame. As shown in Table 2, the black synthetic quartz glass with a transparent layer obtained in Examples 1 and 2 exhibited high emissivity in the far infrared region, outstanding light-shielding properties, the same purity level as synthetic quartz glass in terms of metal impurities, and a high viscosity comparable to that of natural quartz glass employing natural rock crystal as the starting material. It also had a transparent synthetic quartz glass layer with a low carbon content at the surface, and so was a material which showed no carbon release from the surface.

**Table 1**

| | Reaction Conditions | | | Heating Pre Treatment | HeatingConditions | | |
|---|---|---|---|---|---|---|---|
| | Reaction Gas | Reaction Temp (°C) | Reaction Time (h) | Pressure (mmHg) | HeatingTemperature (°C) | HeatingTime (h) | P Pressure (mmHg) |
| Example 1 | hexamethyldisilazane | 500 | 5 | 1 × 10⁻³ | 1500 | 2 | 1 × 10⁻³ |
| Example 2 | hexamethyldisilazane | 500 | 5 | 7 | 1500 | 2 | 7 |
| Comp.Ex.1 | hexamethyldisilazane | 500 | 5 | - | 1500 | 2 | 760 |

**Table 2**

| | Black-Coloured Layer | | | | | | Transparent Layer | | External Appearance | CO₂ lon Current (A) |
|---|---|---|---|---|---|---|---|---|---|---|
| | Emiss (Av. value) | Trans (%) | Metal Impurity (wtppm) | OH group conc. (wtppm) | C conc. (wtppm) | Viscosity 1280°C (log η) | C (wtppm) | thickness (mm) | | |
| Example 1 | 0.90 | 0-3 | 0.1 | <1 | 1000 | 12.0 | 5 | 5-10 | transparent/black | 1.0 × 10⁻¹¹ |
| Example 2 | 0.85 | 0-6 | 0.1 | <1 | 1000 | 11.9 | 5 | 1 | transparent/black | 1.1 × 10⁻¹¹ |
| Comp.Ex.1 | 0.90 | 0-1 | 0.1 | <1 | 1000 | 11.9 | 0 | 0 | black | 5.0 × 10⁻¹¹ |
| Natural Product | 0.75 | 0-91 | 20 | 200 | 10 | 11.8 | 5 | - | colourless transparent | 1.2 ×10⁻¹¹ |

| | | | | | | | | | | |
|---|---|---|---|---|---|---|---|---|---|---|
| Emiss = Emissivity in the far infrared region (Average value) Trans = Transmittance | | | | | | | | | | |

## Claims

1. A method for the production of a black synthetic quartz glass with a transparent layer, comprising subjecting a porous silica glass body containing hydroxyl groups to a gas phase reaction in a volatile organosilicon compound atmosphere at a temperature of between 100°C and 1200°C and, after the reaction, evacuation of the porous silica glass body until a degree of vacuum exceeding 10 mmHg (=1343 Pa) is reached, heating the porous silica glass body at a temperature of between 1200°C and 2000°C under formation of a compact glass body.

2. A production method according to Claim 1, **characterized in that** prior to supplying the volatile organosilicon compound to said porous silica glass body, the porous silica glass body is preheated within the temperature range from 100°C to 1200°C in a reduced-pressure atmosphere.

3. A production method according to Claim 1 or Claim 2, **characterized in that** said volatile organosilicon compound is an organosilazane.

4. A production method according to Claim 3, **characterized in that** said organosilazane is hexamethyldisilazane.

5. A black synthetic quartz glass with a transparent layer produced by a method as described in any of Claims 1 to 4, said black synthetic quartz glass with a transparent layer being **characterized in that** the emissivity of the black quartz portion in the far infrared region is at least 0.8, the 200-10,000 nm light transmittance is no more than 10% at a thickness of 1 mm, the total metal impurity concentration is ≤ 1 wtppm, the contained carbon concentration exceeds 30 wtppm but is no more than 50,000 wtppm, the viscosity at 1280°C is at least 10^{11.7} poise, and there is formed, on the surface, a ≥ 1 mm synthetic quartz glass transparent layer where the contained carbon concentration is less than 30 wtppm
